# EUROPEAN PATENT SPECIFICATION

(11) **EP 4 311 948 B1**
(45) Date of publication and mention of the grant of the patent: **03.12.2025**
(21) Application number: 23188229.1
(22) Date of filing: 27.07.2023
(51) Int. Cl.: F16B 35/06, F16B 37/04

(54) **BOLT FOR DOVETAIL GROOVES**
BOLZEN FÜR SCHWALBENSCHWANZNUTEN
BOULON POUR RAINURES EN QUEUE D'ARONDE

(30) Priority: 28.07.2022 CN 202221972145 U; 31.05.2023 CN 202321357882 U
(43) Date of publication of application: 31.01.2024
(73) Proprietor: Haoheng (Fujian) Building Materials Technology Co., Ltd., Zhangzhou, Fujian 363000 (CN)
(72) Inventor: HONG, Qiuyao, Zhangzhou, 363000 (CN); SU, Yongrun, Zhangzhou, 363000 (CN); SHUI, Sijun, Zhangzhou, 363000 (CN)
(74) Representative: Chung, Hoi Kan

(56) References cited:
- CN-U- 208 858 730
- DE-U1- 29 515 492
- FR-A2- 2 624 220

## Description

### FIELD OF THE INVENTION

The present invention relates to the field of architectural components technology, especially to a bolt for dovetail track grooves.

### BACKGROUND OF THE INVENTION

Currently, in steel frame construction and solar panel installation, the structural design of track grooves is widely adopted. Track grooves, in conjunction with bolts, are extensively used for securing photovoltaic brackets, ceilings, glass curtain walls, keel structures, seismic brackets, sliding tracks, and other construction projects. This combination allows for swift and convenient installation, ease of adjustment, and a significant enhancement in project progress. However, the existing track bolt structures present challenges during installation, such as inconvenient fixation and insufficient supporting strength between the bolts and the track, which hinder the overall installation process.

DE 29515492 U1 discloses a connection arrangement having a first part, a second part, a fastening means for connecting the first part and the second part, and a threaded bolt having a clamping part at one end which can be inserted into the groove or the longitudinal channel and therein when overcoming a resistance force by a rotary movement in the groove. The design is designed to prevent rotation.

FR 2624220 B2 discloses an assembly node intended for the production of reticular spatial structures. In the disclosure, the head of the bolt is surmounted by a relief projecting inside the node on either side of the oblong hole and resting on the inner face of the node along a spherical span of radius identical to that of the inner sphere of the node.

### SUMMARY OF THE INVENTION

The present invention aims to provide a bolt for dovetail grooves to address the foregoing issues.

According to the present invention, a bolt as defined in claim 1 for dovetail grooves is provided. The bolt for dovetail grooves includes a T-shaped body formed by a bolt head and bolt shaft. Limiting surfaces are inclined and located on both sides of the bolt head, and a longitudinal cross-section of the bolt head is dovetail-shaped; both sides of the bolt along a width direction are provided with installation surfaces; at a diagonal junction of the limiting surfaces and installation surfaces is provided with an avoidance surfaces. The installation surfaces, the limiting surfaces and the avoidance surfaces are flat.

In some embodiments, the bolt shaft is threaded along an entire length of the bolt shaft or partially threaded at a front section of the bolt shaft.

In some embodiments, the dovetail-shaped cross-section of the bolt head is smaller than or equal to the dimensions of the dovetail groove.

In some embodiments, the width of the bolt head is smaller than or equal to a mouth of the dovetail groove.

The advantages of this invention are as follows: The bolt is designed with a dovetail-shaped head that matches the dovetail track groove, allowing the distribution of vertical gravitational force into horizontal and longitudinal forces. This effectively disperses the bearing load of the track groove, thus enhancing the overall bearing capacity. Additionally, the inclusion of installation surfaces and avoidance surfaces enables the bolt head to be directly inserted into the dovetail track groove from the slot, and through rotation, achieves a seamless fit with the track groove. This eliminates the need to slide the bolt into various installation points from the end of the track groove, resulting in an accelerated installation process. Furthermore, it allows for flexible addition of installation points as needed, thereby improving construction feasibility, ease of installation, construction efficiency, and project quality. This innovation facilitates the widespread application and promotion of this product.

### BRIEF DESCRIPTION OF THE DRAWINGS

In order to provide a clearer description of the technical solutions in the embodiments of the present invention, the following brief introduction to the accompanying drawings used in the embodiments is provided. It should be understood that the following drawings only illustrate some embodiments of the present invention and should not be construed as limiting the scope. Ordinary skilled artisans in the field can obtain other relevant drawings based on these drawings without exercising inventive effort.
FIG. 1 is a schematic diagram showing a bolt for dovetail grooves according to one aspect of embodiment one of the present invention.
FIG. 2 is a top view diagram of the bolt for dovetail grooves according to to one aspect of embodiment one of the present invention.
FIG. 3 is a front view diagram of the bolt for dovetail grooves according to one aspect of embodiment one of the present invention.
FIG. 4 is a side view diagram of the bolt for dovetail grooves according to one aspect of embodiment one of the present invention.
FIG. 5 is a bottom view of the bolt for dovetail grooves according to to one aspect of embodiment one of the present invention.
FIG. 6 is a schematic diagram showing the bolt for dovetail grooves according to another aspect.
FIG. 7 is a top view diagram of the bolt for dovetail grooves according to another aspect.
FIG. 8 is a bottom view diagram of the bolt for dovetail grooves according to another aspect of embodiment.
FIG. 9 is an installation schematic diagram of the bolt for dovetail grooves according to another aspect of embodiment one of the present invention.
FIG. 10 is an enlarged view diagram of FIG. 9.
FIG. 11 is a schematic diagram showing a bolt for dovetail grooves according to one aspect.
FIG. 12 is a front view diagram of the bolt for dovetail grooves according to one aspect.
FIG. 13 is a bottom view diagram of the bolt for dovetail grooves according to one aspect.
FIG. 14 is a side view diagram of the bolt for dovetail grooves according to one aspect.
FIG. 15 is a schematic diagram the bolt for dovetail grooves according to one aspect.
FIG. 16 is a schematic diagram showing the bolt for dovetail grooves according to another aspect.
FIG. 17 is a schematic diagram showing the bolt for dovetail grooves according to yet another aspect.

In the drawings: 1-bolt head; 11-limiting surface; 12-installation surface; 13-avoidance surface; 2-bolt shaft; 3-dovetail groove; 31-mouth; 41-bolt head; 411-inclinded surface; 412-positioning surface; 413- curved chamfer; 414-wear-resistant layer; 42-bolt shaft.

### DETAILED DESCRIPTION OF THE INVENTION

### EMBODIMENT ONE

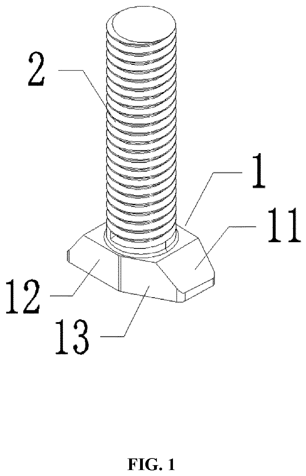

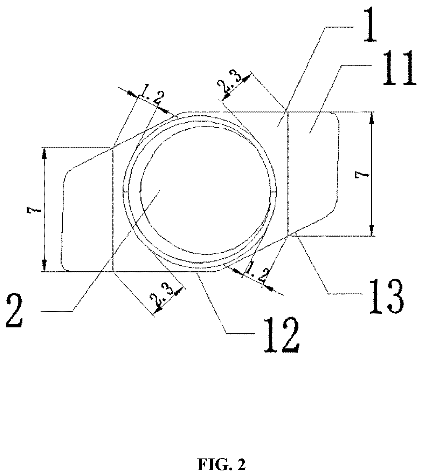

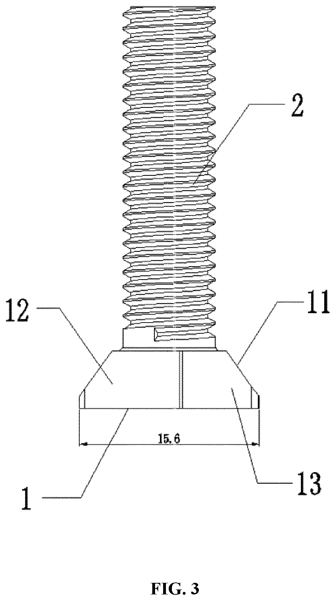

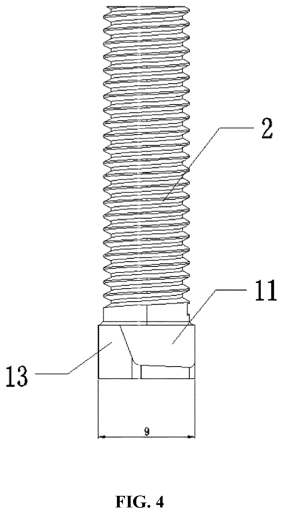

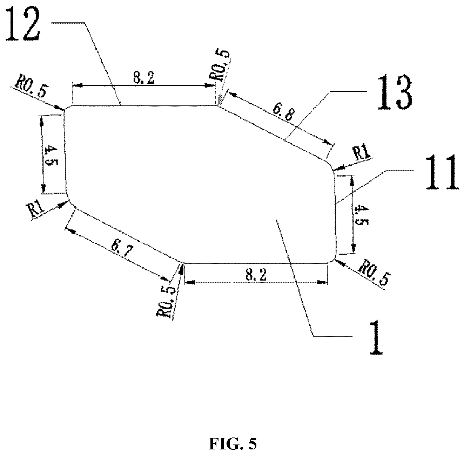

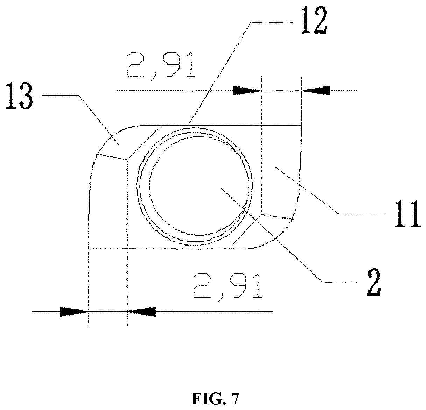

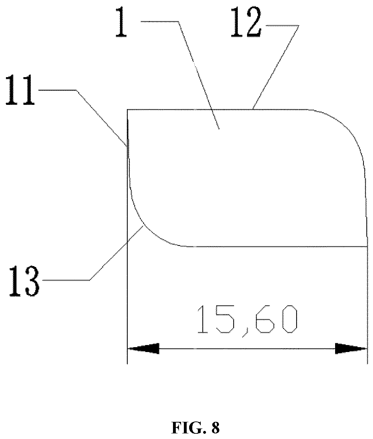

In Embodiment one, as shown in FIGS. 1-10, a bolt designed for dovetail grooves is presented. The bolt includes a T-shaped body consisting of a bolt head 1 and a bolt shaft 2. The bolt head 1 is provided with inclined limiting surfaces 11 on both sides. A longitudinal cross-section of the bolt head 1 is dovetail-shaped. Installation surfaces 12 are provided on both sides of the bolt head 1. At the diagonal junction of the limiting surfaces 11 and installation surfaces 12, an avoidance surface 13 is provided.

The bolt head 1 matches the dovetail groove 3, and the bolt shaft 2 extends out of the mouth 31 of the dovetail groove 3, allowing other components to be securely mounted on steel beams fixed in the dovetail groove 3. The installation surfaces 12 enable direct insertion of the bolt head 1 into the mouth 31 of the dovetail groove 3, eliminating the need for socketing from the end of the track groove. By implementing avoidance surfaces 13, the bolt head 1 can be rotated, aligning the limiting surfaces 11 with the dovetail groove 3 for a snug fit during installation.

Optionally, the avoidance surfaces 13 can be cutting surfaces, curved chamfers, or a combination of both. When processing the avoidance surfaces 13 of the bolt head 1, cutting surfaces offer faster processing speed, while curved chamfers provide a more aesthetically pleasing appearance but may be less conducive to processing efficiency.

In this embodiment, the dovetail-shaped cross-section of the bolt head 1 is smaller than or equal to the dimensions of the dovetail groove 3. When the dovetail-shaped cross-section of the bolt head 1 is the same size as the dovetail groove 3, the match is precise, providing a tight fit and reducing the risk of loosening. However, it may limit adjustability. On the other hand, if the dovetail-shaped cross-section of the bolt head 1 is smaller than the dimensions of the dovetail groove 3, it facilitates adjustments of the bolt head 1 within the dovetail groove 3, allowing for sliding adjustments. Typically, the bolt head's dovetail-shaped cross-section is set slightly smaller than the dimensions of the dovetail groove 3.

Regarding the avoidance surfaces 13, at a certain height, the distance "s" from the center of the bolt shaft 2 to the avoidance surfaces 13 corresponds to the width "w" of the dovetail groove 3 at the same height, with "s" being less than or equal to "w/2." This ensures that when the bolt head 1 rotates, the bolt head 1 can smoothly pass through the dovetail groove 3.

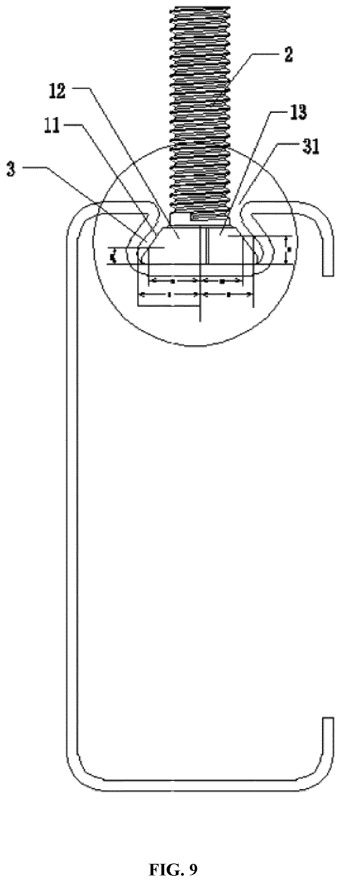

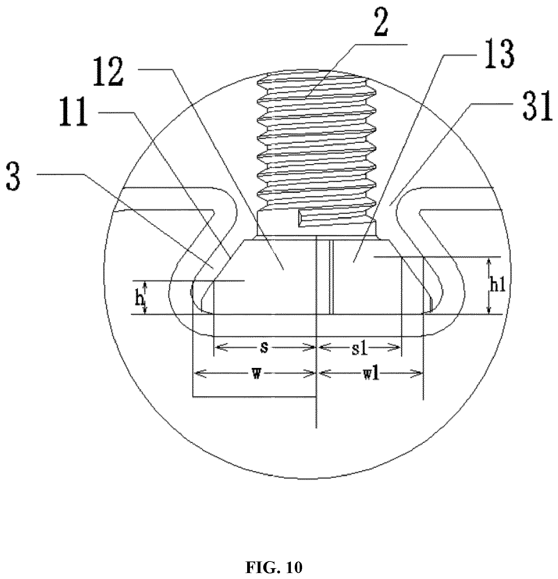

In FIGS. 9 and 10, the heights "h" correspond to the distances "s" and "w," while the heights "h1" correspond to the distances "s1" and "w1."

In this embodiment, the term "a certain height" of the avoidance surfaces 13 refers to the distance from the end face of the bolt shaft 2 as the starting point, while the "same height" of the dovetail groove 3 refers to the distance from the bottom surface of the dovetail groove, away from the mouth, as the starting point. When the bolt is rotated, the lower end face of the bolt head 1 usually aligns with the bottom surface of the dovetail groove 3 before rotation.

Preferably, the minimum width of the limiting surfaces 11 is not less than half the radius of the bolt shaft 2. The preferred minimum width of the limiting surfaces 11 is determined to ensure the strength of the limiting surfaces 11; if it is too small, it may not provide sufficient support.

Additionally, the avoidance surfaces 13 are preferably vertical cutting surfaces. Vertical cutting surfaces are advantageous for machining, as inclined cutting surfaces can be challenging to machine and may damage the cutting tool. Moreover, vertical cutting avoidance surfaces 13 can reduce material usage and component weight.

The limiting surfaces 11, installation surfaces 12, and avoidance surfaces 13 are flat. The shape of these surfaces can be adjusted according to specific requirements, and the shape of the limiting surfaces 11 is typically tailored to match the dovetail groove 3.

The bolt shaft 2 may be threaded along its entire length or partially threaded at the front, depending on the threading requirements.

Furthermore, the width of the bolt head 1 is smaller than or equal to the mouth 31 of the dovetail groove 3.

More particularly, as shown in FIGS. 1-5, the bolt designed for dovetail grooves comprises a T-shaped body formed by a bolt head 1 and a bolt shaft 2. The bolt head 1 is provided with inclined limiting surfaces 11 on both sides. The longitudinal cross-section of the bolt head 1 is dovetail-shaped. Additionally, installation surfaces 12 are provided on both sides of the bolt head 1. At the diagonal junction of the limiting surfaces 11 and installation surfaces 12, avoidance surfaces 13 are formed. The avoidance surface 13 is a combination of cutting surfaces and curved chamfers. One of the avoidance surfaces 13 is curved chamfers, located away from the end of the bolt shaft 2, while the rest of the avoidance surfaces 13 are inclined cutting surfaces. The dovetail-shaped cross-section of the bolt head 1 is smaller than the dimensions of the dovetail groove 3.

At a certain height, the distance "s" from the center of the bolt shaft 2 to the avoidance surfaces 13 corresponds to the width "w" of the dovetail groove 3 at the same height, with "s" being less than w/2. The avoidance surfaces 13 are inclined cutting planes.

The bolt shaft 2 is threaded along its entire length, and the width of the bolt head 1 is smaller than the mouth 31 of the dovetail groove 3. The dimensions of the bolt head 1 are shown in Figures 1-5.

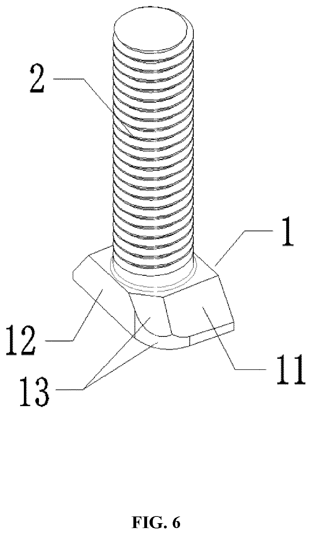

On another aspect, referring to FIGS. 6-8, a bolt designed for dovetail grooves includes a T-shaped body formed by a bolt head 1 and a bolt shaft 2. The bolt as shown in FIGS. 6-8 does not form part of the invention but present background art that is useful for understanding the invention. The bolt head 1 is provided with inclined limiting surfaces 11 on both sides. A longitudinal cross-section of the bolt head 1 is dovetail-shaped. Additionally, installation surfaces 12 are provided on both sides of the bolt head 1. At the diagonal junction of the limiting surfaces 11 and installation surfaces 12, avoidance surfaces 13 are formed. The avoidance surfaces 13 are cutting surfaces, and the dovetail-shaped cross-section of the bolt head 1 is slightly smaller than the dimensions of the dovetail groove 3. At a certain height, the distance "s" from the center of the bolt shaft 2 to the avoidance surfaces 13 corresponds to the width "w" of the dovetail groove 3 at the same height, with "s" being less than w/2. The avoidance surfaces 13 are vertical cutting surfaces. The bolt shaft 2 is threaded along its entire length, and the width of the bolt head 1 is smaller than the mouth 31 of the dovetail groove 3. The dimensions of the bolt head 1 are shown in FIG. 6-8

### EMBODIMENT TWO

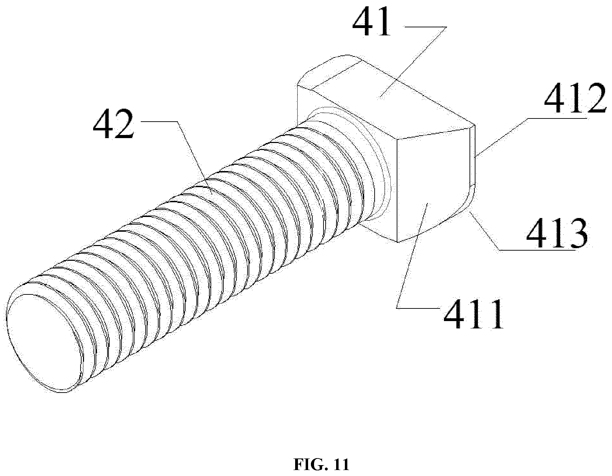

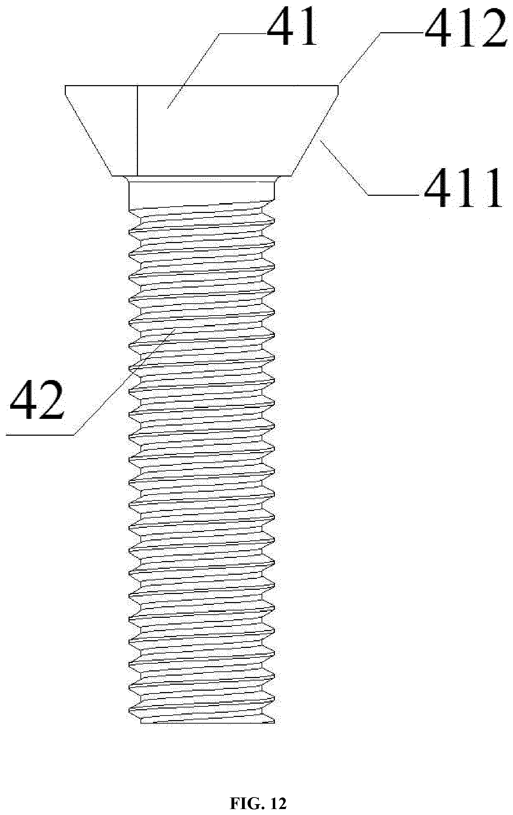

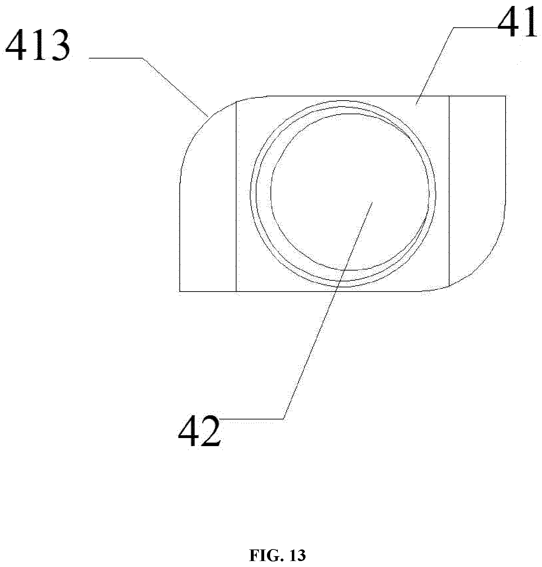

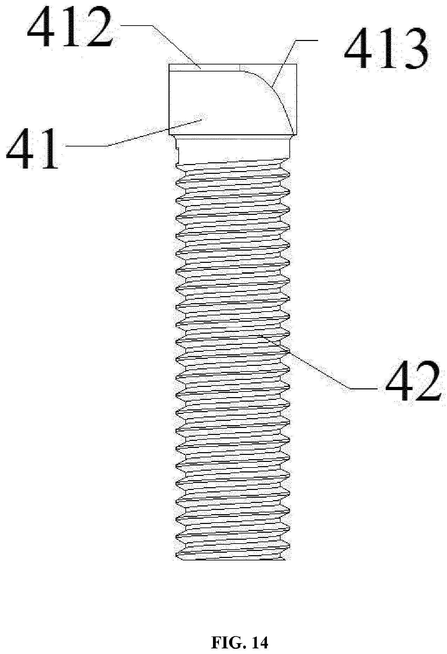

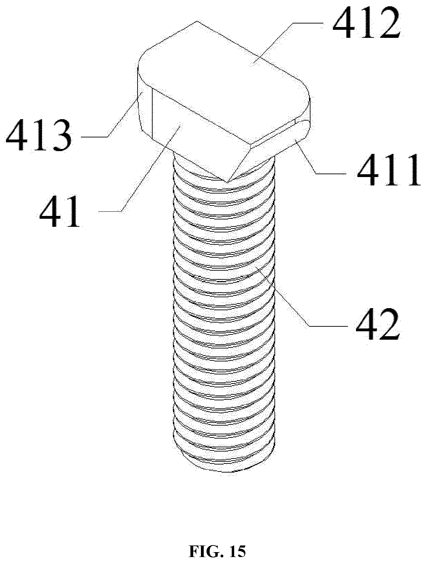

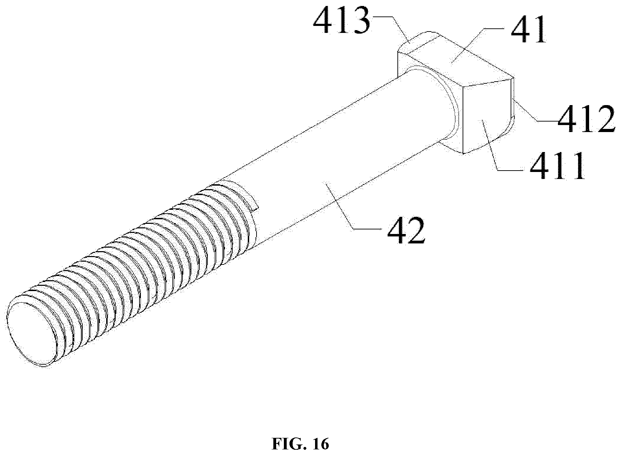

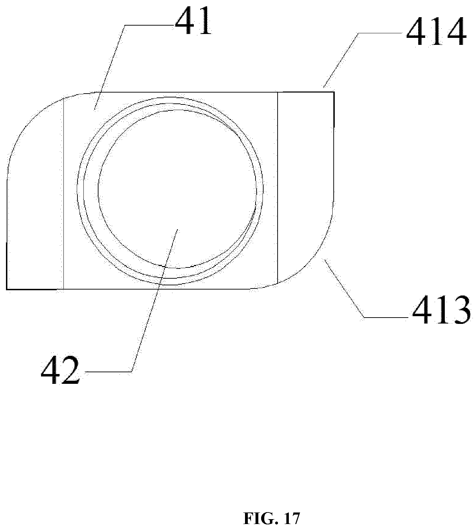

Referring to FIGS. 11-17, a bolt designed for dovetail grooves is presented. This embodiment do not form part of the invention but present background art that is useful for understanding the invention. The bolt for dovetail grooves includes a T-shaped body formed by a bolt head 41 and a bolt shaft 42. The bolt head 41 is provided with inclined surfaces 411 on both sides. A longitudinal cross-section of the bolt head 41 is dovetail-shaped.

The T-shaped body head 21 is placed within the dovetail groove, and the bolt shaft 42 is connected to other components and secured using nuts. The inclined surfaces 411 on both sides of the bolt head 41 provide support by contacting the track groove. The dovetail-shaped bolt head 41 can be used with regular track grooves, but it is preferably coupled with dovetail-shaped grooves to achieve optimal force distribution.

In this embodiment, the upper end of the dovetail-shaped bolt head 41 is provided with positioning surfaces 412. These positioning surfaces 412 contact the side walls of the track groove, ensuring that the bolt head 41 is positioned securely within the track groove during rotation. The positioning surfaces 412 have a certain height on both sides. Preferably, the upper surface of the positioning surfaces 412 is square-shaped, which can be either rectangular or square. By inserting the rectangle surfaces into the dovetail groove, the inclined surfaces 411 of the dovetail-shaped bolt head 41 fit perfectly with the dovetail grooves of the track.

Preferably, one pair of diagonals of the rectangle surface is provided with curved chamfers 413. By providing a pair of curved chamfers 413, the positioning surface can be designed as a rectangle, and the short side of the rectangle can be inserted directly into the middle of the track groove. When the bolt is rotated, the curved chamfers 413 allow for smooth passage through the track groove, while the other pair of right angles is obstructed by the track groove, limiting the bolt's movement. This allows the bolt to be secured using nuts.

Additionally, the right angles of the rectangle surface are provided with reinforcing pieces or wear-resistant layers 414. The reinforcing pieces or wear-resistant layers 414 protect the right angles during locking, preventing wear and ensuring that the locking is effective without any risk of slipping or breaking the right angles.

In this embodiment, the inclined surfaces 411 on the bolt head 41 can either be flat. The inclined surfaces 411 are designed to match the dovetail-shaped inclined surfaces of the track groove.

The bolt shaft 42 can be threaded along its entire length or partially threaded in the middle or lower section, depending on specific requirements.

In the first aspect of this embodiment, the dimensions of the bolt head are 15mm in length, 9mm in width, and 5mm in height. The bolt shaft has a diameter of 8mm and a length of 30mm.

In the second aspect of this embodiment, the dimensions of the bolt head are the same as in the first aspect 15mm in length, 9mm in width, and 5mm in height, while the bolt shaft has a diameter of 8mm and a total length of 60mm. The bolt shaft is threaded in the middle or lower section.

During use, the bolt head 41 is inserted into the track groove from one end. Preferably, the dovetail-shaped bolt head 41 is used with a dovetail-shaped track groove, and it can be slid and adjusted to the appropriate position. If the positioning surfaces 412 have curved chamfers 413, the short side of the rectangular surface can be directly inserted into the middle of the track groove. Then, by manually rotating the bolt, the curved chamfers 413 smoothly pass through the inner wall of the track groove, allowing the long side of the rectangular surface to span across the mouth of the track groove. By sliding and further rotating the bolt, the right angles of the positioning surfaces 412 will engage and lock with the inner wall of the track groove. Then, by using a nut, the components can be securely fastened to the bolt shaft 42, completing the installation.

The described above are merely preferred embodiments of the present invention and are not intended to limit the scope of the invention. Various modifications of the present invention are included within the scope of the invention as claimed. This allows for a wide range of changes and variations that can be made by those skilled in the art without departing from the scope of the present invention.

## Claims

1. A bolt for dovetail groove, comprising a T-shaped body formed by a bolt head (1) and bolt shaft (2), limiting surfaces (11) are inclined and located on both sides of the bolt head (1), and a longitudinal cross-section of the bolt head (1) is dovetail-shaped; both sides of the bolt along a width direction are provided with installation surfaces (12); at each diagonal junction of the limiting surface (11) and installation surface (12) is provided with an avoidance surface (13);
wherein
the limiting surfaces (11) and the installation surfaces (12) are flat,
**characterised in that** the avoidance surfaces (13) are also flat.

2. The bolt according to claim 1, **characterized in that** an upper end of the dovetail-shaped bolt head (41) is provided with a positioning surface (412); the bolt shaft (42) is threaded along an entire length of the bolt shaft (42) or partially threaded at a middle or lower section of the bolt shaft (42).

3. The bolt according to claim 2, **characterized in that** a rectangle surface is provided on the positioning surface (412).

4. The bolt according to claim 3, **characterized in that** right angles on the rectangle surface are provided with wear-resistant layers (414).

## Patentansprüche

1. Schraube für eine Schwalbenschwanznut, umfassend einen T-förmigen Körper, gebildet durch einen Schraubenkopf (1) und einen Schraubenschaft (2), wobei Begrenzungsflächen (11) beidseitig des Schraubenkopfes (1) angeordnet und geneigt sind, und wobei ein Längsschnitt des Schraubenkopfes (1) schwalbenschwanzförmig ausgebildet ist; wobei an beiden Seiten der Schraube in Breitenrichtung Montageflächen (12) vorgesehen sind; und an jeder diagonalen Verbindung zwischen der Begrenzungsfläche (11) und der Montagefläche (12) eine Ausweichfläche (13) angeordnet ist;
**dadurch gekennzeichnet, dass**
die Begrenzungsflächen (11), die Montageflächen (12) und die Ausweichflächen (13) eben ausgebildet sind.

2. Schraube nach Anspruch 1, **dadurch gekennzeichnet, dass** ein oberes Ende des schwalbenschwanzförmigen Schraubenkopfes (41) mit einer Positionierfläche (412) versehen ist; und dass der Schraubenschaft (42) über seine gesamte Länge oder abschnittsweise im mittleren oder unteren Bereich mit einem Gewinde versehen ist.

3. Schraube nach Anspruch 2, **dadurch gekennzeichnet, dass** auf der Positionierfläche (412) eine rechteckige Fläche vorgesehen ist; und dass die geneigten Flächen (411) als ebene oder gekrümmte Flächen ausgebildet sind.

4. Schraube nach Anspruch 3, **dadurch gekennzeichnet, dass** ein Paar Diagonalen der rechteckigen Fläche als gekrümmte Fasen (413) ausgebildet ist und dass an den rechten Winkeln der rechteckigen Fläche verschleißfeste Schichten (414) vorgesehen sind.

## Revendications

1. Boulon pour rainure en queue d'aronde, comprenant un corps en forme de T constitué d'une tête de boulon (1) et d'une tige de boulon (2), des surfaces de limitation (11) étant inclinées et disposées de part et d'autre de la tête de boulon (1), la section longitudinale de ladite tête de boulon (1) présentant une forme en queue d'aronde ; les deux côtés du boulon, selon la direction de la largeur, comportant des surfaces d'installation (12) ; à chaque jonction diagonale entre la surface de limitation (11) et la surface d'installation (12) étant prévue une surface d'évitement (13) ;
**caractérisé en ce que**
les surfaces de limitation (11), les surfaces d'installation (12) et les surfaces d'évitement (13) sont planes.

2. Boulon selon la revendication 1, **caractérisé en ce que** l'extrémité supérieure de la tête de boulon (41) en forme de queue d'aronde comporte une surface de positionnement (412) ; la tige de boulon (42) étant filetée sur toute sa longueur ou partiellement filetée sur une portion médiane ou inférieure de ladite tige (42).

3. Boulon selon la revendication 2, **caractérisé en ce qu'**une surface rectangulaire est disposée sur la surface de positionnement (412) ; les surfaces inclinées (411) étant planes ou courbes.

4. Boulon selon la revendication 3, **caractérisé en ce qu'**une paire de diagonales de la surface rectangulaire présente des chanfreins courbes (413), et **en ce que** les angles droits de ladite surface rectangulaire comportent des couches résistantes à l'usure (414).
